## Europäisches Patentamt
## European Patent Office
## Office européen des brevets

(19)

(11) Numéro de publication : **0 051 022**
**B1**

(12)

# FASCICULE DE BREVET EUROPÉEN

(45) Date de publication du fascicule du brevet :
24.04.85

(51) Int. Cl.⁴ : **G 02 C   5/22**

(21) Numéro de dépôt : **81401653.1**

(22) Date de dépôt : **21.10.81**

---

(54) **Charnière de lunettes.**

---

(30) Priorité : **28.10.80 FR 8023029**

(43) Date de publication de la demande :
**05.05.82 Bulletin 82/18**

(45) Mention de la délivrance du brevet :
**24.04.85 Bulletin 85/17**

(84) Etats contractants désignés :
**AT CH DE IT LI**

(56) Documents cités :
**US-A- 3 042 961**
**US-A- 3 671 111**

(73) Titulaire : **S.A. Vve Henri CHEVASSUS Société Ano-**
**nyme dite:**
**La Doye**
**F-39400 Morez (FR)**

(72) Inventeur : **Emain, Jean**
**38, Cité de Serger**
**F-39200 Saint-Claude (FR)**

(74) Mandataire : **Moulines, Pierre et al**
**Cabinet BEAU de LOMENIE 55, rue d'Amsterdam**
**F-75008 Paris (FR)**

---

Jouve, 18, rue St-Denis, 75001 Paris, France

## Description

La présente invention a pour objet une charnière de lunettes.

Les charnières de type classique actuellement connues comprennent trois éléments, dont un élément à tenon mâle articulé dans un élément à tenon femelle au moyen d'un troisième élément constitué d'un axe d'articulation.

Suivant les fabrications, si l'élément à tenon mâle est solidaire de l'une des branches, l'élément à tenon femelle est solidaire de la face portant les verres, ou inversement.

L'axe d'articulation comporte à l'une de ses extrémités une tête fraisée permettant le réglage, au moyen d'un tournevis, de l'axe dont l'autre extrémité présente une partie filetée vissée dans un trou taraudé prévu sur l'un des éléments de la charnière. Ce serrage du couple de manœuvre de l'articulation et par conséquent de la branche assujettie sur l'un des éléments, est obtenu par le vissage de l'axe d'articulation qui crée une contrainte mécanique de freinage, par friction sur les faces des éléments à tenon de l'articulation.

On connaît un dispositif de charnières ayant fait l'objet du brevet US-A 3.042.961 dans lequel, il est prévu dans l'articulation de la charnière de lunettes une bague de friction amovible compressible en matière plastique semi-élastique qui est interposée entre l'axe et le charnon. Cette disposition a pour but de faciliter l'assemblage et d'éviter le grippage qui se produit au contact des deux éléments à tenons réalisés en un même métal et sans contrainte axiale, lors du mouvement d'ouverture et de fermeture d'une branche de lunettes.

Toutefois ce dispositif ne permet pas de créer un freinage dans le sens axial et un serrage radial comme dans la présente invention.

Conformément à la présente invention, le tenon mâle de l'un des deux premiers éléments de la charnière présente un alésage cylindrique dans lequel est disposée la bague de friction qui exerce une force de freinage dirigée axialement et agissant par contact sur les deux faces intérieures opposées des branches de l'élément femelle, ladite bague de friction, à l'état contraint, présentant entre ses deux faces opposées une hauteur au moins égale à l'épaisseur du tenon mâle.

La bague de friction est très simple, facile à fabriquer en série par moulage, elle est amovible afin de permettre, si cela est nécessaire, sa dépose et sa remise en place rapide, lors des opérations de soudage ou de dépose à chaud d'un élément mâle ou femelle de la charnière sur la face ou la branche de lunettes.

En raison de sa forme tubulaire, la bague peut se loger dans un alésage d'un élément à tenon d'une charnière de type classique sans nécessiter pour cela une opération supplémentaire d'usinage en ce qui concerne l'alésage et par conséquent sans augmentation du coût de fabrication.

La bague qui est montée et positionnée sans contrainte dans un élément à tenon de la charnière peut remplir deux fonctions.

La première fonction consiste en un freinage dans le sens axial par contact de la bague avec l'autre élément à tenon, lors du mouvement d'ouverture et de fermeture de la branche de lunettes.

La seconde fonction consiste en un serrage radial qui se produit par le contact de la bague avec le corps lisse de l'axe d'articulation qui peut comporter une partie filetée épaulée ou non.

Le dispositif suivant l'invention peut faire l'objet de plusieurs applications. Suivant une première application, la bague est montée en combinaison avec un axe d'articulation classique présentant une partie filetée.

Dans ce cas le couple de freinage est obtenu à la demande en effectuant un vissage fractionnel de l'axe d'articulation.

La bague déformable exerce aussi un serrage radial sur l'axe d'articulation empêchant ainsi son dévissage et maintenant de façon constante dans le temps le couple de freinage d'ouverture et de fermeture de la branche.

Suivant une deuxième application, l'axe d'articulation présentant une partie filetée épaulée est bloqué sur une branche de l'élément à tenon femelle. Le couple de freinage est prédéterminé en tenant compte des tolérances des éléments constituant la charnière.

Suivant une troisième application, l'axe d'articulation présente un corps lisse non fileté. La bague présente des tolérances telles qu'il est contraint axialement et radialement au montage et qu'il en résulte un freinage entre les deux éléments à tenon et un positionnement axial de l'axe d'articulation.

Dans ce mode d'application les branches du tenon femelle sont de section plus importante que dans les précédents modes d'application pour supporter et maintenir la poussée axiale de la bague de friction.

D'autres caractéristiques et avantages de l'invention seront mieux compris à la lecture de la description qui va suivre de plusieurs modes de réalisation et en se référant aux dessins annexés sur lesquels ;

la figure 1 est une vue en plan d'un mode de réalisation d'une charnière de lunettes comportant une bague de friction en matière semi-élastique ;

la figure 2 est une vue en coupe de la charnière suivant la ligne II-II de la figure 1 ;

la figure 3 est une vue en élévation et en coupe d'une variante de réalisation de la charnière ;

la figure 4 est une vue en élévation et en coupe de la charnière représentée à la figure 3 avant le montage de l'axe d'articulation ;

la figure 5 est une vue en élévation et en coupe d'une charnière comportant une bague semi-élastique positionnée sur le tenon femelle avec axe d'articulation à tête à méplat positionné sur une branche de l'élément femelle ;

la figure 6 est une vue en plan de dessus de la charnière représentée à la figure 5 ;

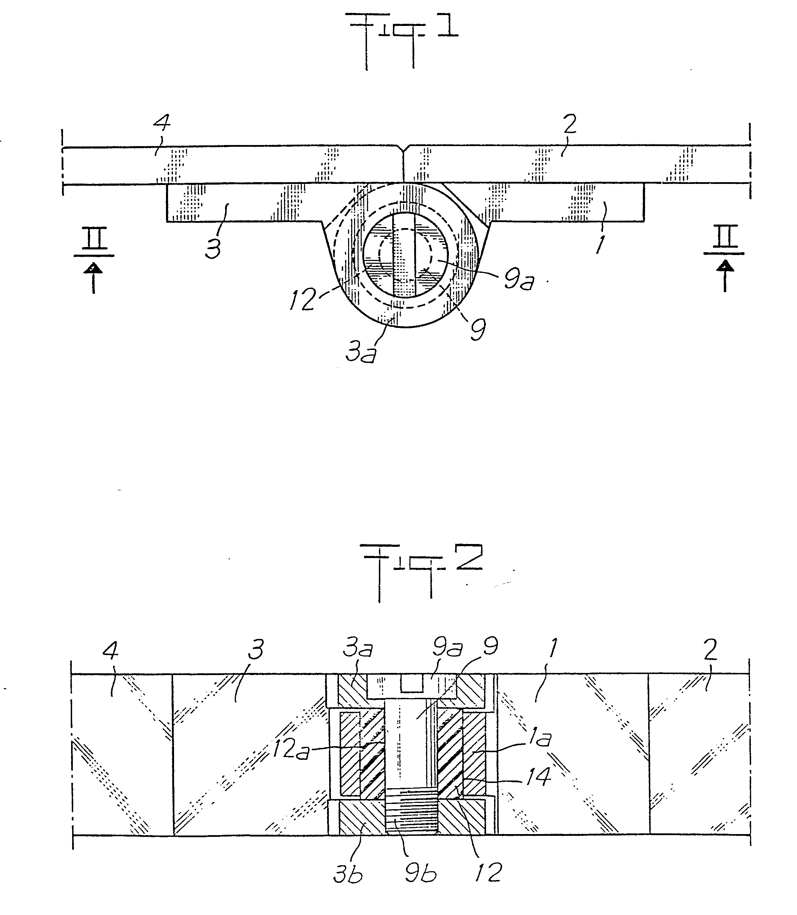

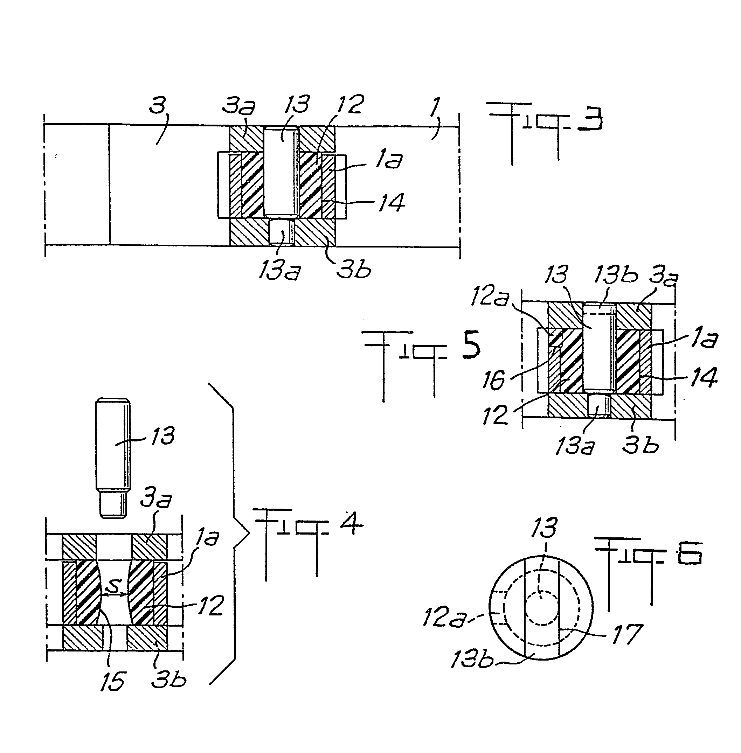

Aux figures 1 et 2 on a représenté une charnière de lunettes constituée d'un élément 1 à tenon mâle 1a, ledit élément étant fixé notamment par des rivets ou par soudure sur l'une des branches 2 de la paire de lunettes. Le tenon mâle 1a est engagé entre les branches 3a, 3b d'un tenon femelle solidaire d'un élément 3 fixé au moyen de rivets ou par soudure sur la face 4 des lunettes.

Les éléments 1 et 3 sont reliés par un axe d'articulation constitué d'une vis 9 dont la tête fraisée 9a est montée ajustée dans un alésage de l'une des branches 3a du tenon femelle et l'autre extrémité de la vis 9 présente une partie filetée 9b qui est vissée dans un trou taraudé de l'autre branche 3b. Cette vis est montée librement et ne comporte aucun épaulement. Autour de la vis 9 est montée une bague de friction 12 engagée dans un alésage cylindrique 14 ménagé dans le tenon mâle 1a. La bague de friction 12 amovible compressible en matière plastique semi-élastique exerce une force de freinage dirigée axialement et agissant par contact sur les deux faces intérieures opposées des branches 3a, 3b de l'élément femelle 3, ladite bague de friction 12, à l'état contraint, présentant entre ses deux faces opposées une hauteur au moins égale à l'épaisseur du tenon mâle 1a. La bague de friction 12 comporte un alésage 12a, dans lequel est engagée la tige de la vis 9 et dont au moins une partie présente, lorsque la bague 12 est à l'état libre, non contrainte, une section inférieure à celle de ladite tige de la vis 9 qui, lorsqu'elle est engagée dans l'alésage de la bague, produit, une dilatation de ladite bague 12 exerçant ainsi une force de freinage radiale sur la partie cylindrique de la tige de la vis 9 assurant ainsi un positionnement axial de l'axe ou de la vis 9.

Aux figures 3 et 4 on a représenté une variante de réalisation dans laquelle le tenon mâle 1a présente non pas un logement fermé mais un alésage 14 débouchant à ses deux extrémités, de telle sorte que la bague semi-élastique 12 est en contact avec les deux branches 3a 3b, du tenon femelle.

Avant le montage de l'axe 13 dans la bague 12 à l'état libre, l'alésage 15 présente des parois courbes délimitant une section S minimale dans la partie centrale, de telle sorte que lors de l'engagement de l'axe 13 dans l'alésage 15 la bague se trouve comprimée radialement et axialement dans le logement du tenon mâle, l'axe 13 est ainsi maintenu serré, et une force de freinage est exercée entre les deux branches 3a, 3b du tenon femelle.

Aux figures 5 et 6 on a représenté une variante de réalisation de la charnière dans laquelle la bague semi-élastique 12 comporte un tenon radial 12a engagé dans un logement 16 du tenon mâle 1a qui est ainsi solidarisé de la bague 12. L'axe d'articulation 13 comporte une tête présentant un méplat 13b engagé dans un logement 17 ménagé dans la branche 3a du tenon femelle. L'autre extrémité 13a de l'axe est engagée dans la branche 3b du tenon femelle.

## Revendications

1. Charnière de lunettes constituée de trois éléments dont deux premiers éléments (1, 3) respectivement solidaires de la face de lunettes (4) et de l'une des branches (2) comportant un élément (1) à tenon mâle (1a) engagé entre les deux branches (3a, 3b) d'un élément à tenon femelle, lesdits deux premiers éléments (1, 3) étant reliés entre eux par un troisième élément constitué d'un axe d'articulation (9, 13) qui est monté dans le charnon de chacun des tenons (1a, 3a, 3b) avec interposition d'une bague de friction amovible compressible en matière plastique semi-élastique entre le charnon du tenon mâle (1a) et l'axe d'articulation (9, 13), caractérisé en ce que le tenon mâle (1a) de l'un des deux premiers éléments (1) de la charnière présente un alésage cylindrique (14) dans lequel est disposée la bague de friction (12) qui exerce une force de freinage dirigée axialement et agissant par contact sur les deux faces intérieures opposées des branches (3a, 3b) de l'élément femelle (3), ladite bague de friction (12), à l'état contraint, présentant entre ses deux faces opposées une hauteur au moins égale à l'épaisseur du tenon mâle (1a).

2. Charnière de lunettes suivant la revendication 1, caractérisée en ce que la bague de friction (12, 10) comporte un alésage dont au moins une partie présente, lorsque la bague (12, 10) est à l'état libre, non contrainte une section inférieure à celle dudit axe d'articulation (13, 9) qui, lorsqu'il est engagé dans l'alésage (14) ou contre l'alésage du logement (7) du tenon mâle (1a), ladite bague (12, 10) exerçant une force de freinage radiale sur la partie cylindrique de l'axe d'articulation (9, 13) assurant un positionnement axial dudit axe (9, 13).

3. Charnière suivant la revendication 2, caractérisée en ce que l'axe d'articulation (9) présente une partie filetée (9b) épaulée ou non épaulée et il est positionné axialement par la bague (12, 10) empêchant ainsi son dévissage de la branche (3b) du tenon femelle (3).

4. Charnière suivant les revendications 1 et 2, caractérisée en ce que la hauteur de la bague de friction (12), à l'état libre, non contrainte, et disposée dans l'alésage (14) du tenon mâle (1a) de l'élément (1), est au moins égale à la distance séparant les deux faces intérieures des branches du tenon femelle (3a, 3b).

5. Charnière suivant l'une quelconque des revendications 1 à 4 caractérisée en ce que la bague de friction (12) est amovible, et elle est montée à ajustement glissant dans l'alésage (14) du tenon mâle (1a) de l'élément 1, ladite bague (12) pouvant être facilement démontée de son alésage (14).

6. Charnière suivant la revendication 1, caractérisée en ce que la bague de friction (12) comporte au moins un tenon radial (2a) engagé dans un logement correspondant (16) ménagé dans l'élément à tenon mâle (1a), qui est ainsi solidarisé dudit tenon radial.

7. Charnière suivant la revendication 1, caractérisée en ce que l'axe d'articulation (13) comporte une tête présentant un méplat (13b) engagé dans un logement (17) ménagé dans la branche (3a) du tenon femelle.

**Claims**

1. Hinge for spectacles frame constituted by three elements, two first elements (1, 3) of which are respectively fast with the frame face (4) and with one of the temple arms (2) comprising an element (1) with a male tenon (1a) engaged between the two sides (3a, 3b) of a female tenon element, said first two elements (1, 3) being joined together by a third element constituted of a pivoting axis (9, 13) which is mounted in the knuckle of each of tenons (1a, 3a, 3b) with interposition of a removable compressible friction ring in semi-elastic plastic material, between the knuckle of the male tenon (1a) and the pivoting axis (9, 13), characterized in that the male tenon (1a) of one of the first two elements (1) of the hinge presents a cylindrical bore (14) inside which is placed the friction ring (12) which exerts a braking force directed axially and acting by contact on the two opposite inner faces of the two sides (3a, 3b) of the female element (3), said friction ring (12) having, in the compressed state, between its two opposed faces a height equal to at least the thickness of the male tenon (1a).

2. Hinge for spectacles frame according to claim 1, characterized in that the friction ring (12, 10) comprises a bore, part of which at least presents, when said ring (12, 10) is in a free non-compressed state, a smaller cross-section than that of said pivoting axis (13, 9) which, when it is engaged in the bore (14) or against the bore of the housing (7) of the male tenon (1a), said ring (12, 10) applying a radial braking force on the cylindrical part of the pivoting axis (9, 13) which force ensures the axial position of said axis (9, 13).

3. Hinge according to claim 2, characterized in that the pivoting axis (9) presents a threaded portion (9b) which may or may not be shouldered, and it is held in axial position by the ring (12, 10) thus preventing it from being unscrewed from the side (3b) of female tenon (3).

4. Hinge according to claims 1 and 2, characterized in that the height of the friction ring (12) in the free non-compressed state and positioned inside the bore (14) of the male tenon (1a) of element (1), is at least equal to the distance separating the two inner faces of the sides of the female tenon (3a, 3b).

5. Hinge according to any one of claims 1 to 4, characterized in that the friction ring (12) is removable, and it is mounted such as to be slidably adjusted inside the bore (14) of the male tenon (1a) of element 1, said ring (12) being readily dismountable from its bore (14).

6. Hinge according to claim 1, characterized in that the friction ring (12) comprises at least one radial tenon (12a) engaged in a corresponding recess (16) provided in the male tenon element (1a), which is thus integral with said radial tenon.

7. Hinge according to claim 1, characterized in that the pivoting axis (13) comprises a head with a flat part (13a) which is engaged in a recess (17) provided in the side (3a) of the female tenon.

**Patentansprüche**

1. Brillenscharnier aus drei Elementen, von denen zwei erste Elemente (1, 3), die mit der Brillenfläche (4) bzw. einem der Bügel (2) fest verbunden sind, ein Element (1) mit eindringendem Ansatz (1a) aufweisen, der zwischen die beiden Schenkel (3a, 3b) eines Elements mit aufnehmendem Ansatz eingesetzt ist, wobei die beiden ersten Elemente (1, 3) durch ein drittes Element miteinander verbunden sind, das durch eine Gelenkachse (9, 13) gebildet ist, die in der Scharnierbohrung jedes der Ansätze (1a, 3a, 3b) unter Zwischenschaltung eines abnehmbaren zusammendrückbaren Reibrings aus halbelastischem Kunststoff zwischen der Scharnierbohrung des eindringenden Ansatzes (1a) und der Gelenkachse (9, 13) eingebaut ist, dadurch gekennzeichnet, daß der eindringende Ansatz (1a) eines der beiden ersten Elemente (1) des Scharniers eine zylindrische Bohrung (14) aufweist, in der der Reibring (12) angeordnet ist, der eine Reibungskraft ausübt, die axial gerichtet ist und durch Berührung mit den beiden gegenüberliegenden Innenflächen der Schenkel (3a, 3b) des aufnehmenden Elements (3) wirkt, wobei der Reibring (12) im belasteten Zustand zwischen seinen beiden gegenüberliegenden Flächen eine Höhe hat, die wenigstens gleich der Dicke des eindringenden Ansatzes (1a) ist.

2. Brillenscharnier nach Anspruch 1, dadurch gekennzeichnet, daß der Reibring (12, 10) eine Bohrung aufweist, von der wenigstens ein Teil, wenn der Ring (12, 10) sich im freien unbelasteten Zustand befindet, einen kleineren Querschnitt als denjenigen der Gelenkachse (13, 9) aufweist, die, wenn sie in die Bohrung (14) eingesetzt ist oder gegen die Bohrung des Sitzes (7) des eindringenden Ansatzes (1a), wobei dieser Ring (12, 10) auf den zylindrischen Teil der Gelenkachse (9, 13) eine radiale Reibungskraft ausübt und eine axiale Positionierung dieser Achse (9, 13) gewährleistet.

3. Scharnier nach Anspruch 2, dadurch gekennzeichnet, daß die Gelenkachse (9) einen abgesetzten oder nicht-abgesetzten Gewindeteil (9b) aufweist und durch den Ring (12, 10) axial positioniert ist, der somit dessen Herausschrauben aus dem Schenkel (3b) des aufnehmenden Ansatzes (3) verhindert.

4. Scharnier nach den Ansprüchen 1 und 2, dadurch gekennzeichnet, daß die Höhe des Reibrings (12), der sich im freien unbelasteten Zustand befindet und in der Bohrung (14) des eindringenden Ansatzes (1a) des Elements (1) angeordnet ist, wenigstens gleich dem Abstand zwischen den beiden Innenflächen der Schenkel (3a, 3b) des aufnehmenden Ansatzes ist.

5. Scharnier nach einem der Ansprüche 1 bis 4, dadurch gekennzeichnet, daß der Reibring (12) abnehmbar und mit Schiebesitz in der Bohrung (14) des eindringenden Ansatzes (1a) des Elements (1) eingebaut ist, wobei dieser Ring (12) leicht aus seiner Bohrung herausgenommen werden kann.

6. Scharnier nach Anspruch 1, dadurch gekennzeichnet, daß der Reibring (12) wenigstens einen radialen Ansatz (12a) aufweist, der in einen entsprechenden Sitz (16) eingesetzt ist, der im Element mit eindringendem Ansatz (1a) ausgebildet ist, der somit mit dem radialen Ansatz fest verbunden ist.

7. Scharnier nach Anspruch 1, dadurch gekennzeichnet, daß die Gelenkachse (13) einen Kopf mit einer Abflachung (13b) aufweist, die in einen Sitz (17) eingesetzt ist, der im Schenkel (3a) des aufnehmenden Ansatzes ausgebildet ist.

0 051 022

## Fig 1

## Fig 2

1

Fig 3

Fig 5

Fig 4

Fig 6